# EUROPÄISCHE PATENTSCHRIFT

(11) **EP 0 569 931 B1**
(45) Veröffentlichungstag und Bekanntmachung des Hinweises auf die Patenterteilung: **28.02.1996**
(21) Anmeldenummer: 93107641.8
(22) Anmeldetag: 11.05.1993
(51) Int. Cl.: F16K 31/60

(54) **Handgriff**
Handle
Poignée

(30) Priorität: 11.05.1992 DE 4215408
(43) Veröffentlichungstag der Anmeldung: 18.11.1993
(73) Patentinhaber: KSB Aktiengesellschaft, D-67227 Frankenthal (DE)
(72) Erfinder: Wattignier, Claude, F-33400 Talence (FR); Laulhé, René, F-33140 Villenave d'Ornon (FR); Bauer, Udo, W-8500 Nürnberg 30 (DE)

(56) Entgegenhaltungen:
- FR-A- 2 585 440
- US-A- 1 697 278
- US-A- 1 708 145
- US-A- 1 794 834
- US-A- 4 815 693

## Beschreibung

Es ist bekannt, zur Betätigung von Armaturen Handgriffe zu verwenden, welche über eine Welle auf ein Verschlußstück wirken. Das Verschlußstück kann durch Schwenkbewegung um die Wellenachse als Drehachse verschiedene Positionen in der Armatur einnehmen. Bei bekannten Bauformen wird ein Handgriff auf ein über einen Endflansch eines Gehäusehalses herrausragendes Wellenende gesteckt.

Die Fixierung des Verschlußstückes in einer bestimmten Position erfolgt durch einen mehrteiligen Mechanismus. Dieser besteht oftmals aus einem im Hebel des Handgriffes eingebauten beweglichen Rastgriff, welcher mit einem konturierten Bereich, z. B. Nocken oder einer Verzahnung, versehen ist. Zur Verriegelung des Handgriffes gegen unbeabsichtigtes Schwenken greift dieser konturierte Bereich in eine am Gehäuse befindliche Rastscheibe ein.

Ein derartiger Handgriff ist in der DE-C-3 235 320 gezeigt. In dem Hebel des Handgriffs befindet sich ein Rastgriff, welcher im Hebel drehbar gelagert ist. Auf den Rastgriff wirkt eine Druckfeder, welche einen Abstand zwischen dem Hebel und dem Rastgriff herstellt. Über einen Nocken bzw. eine Verzahnung an dem der Welle zugewendeten Ende wird eine Verriegelung dadurch erreicht, daß der Nocken bzw. die Verzahnung in eine mit Aussparungen versehene Scheibe am Gehäusehals einrastet. Die Betätigung erfolgt durch das Andrücken des Rastgriffes gegen den Hebel beim Ergreifen des Handgriffes. Das Wellenende ist nicht gegen Umwelteinflüsse abgeschirmt und der Wellendurchgang weist eine zusätzliche Dichtung auf, welche das Eindringen von Schmutz oder Kondenswasser in den Gehäusehals verhindert.

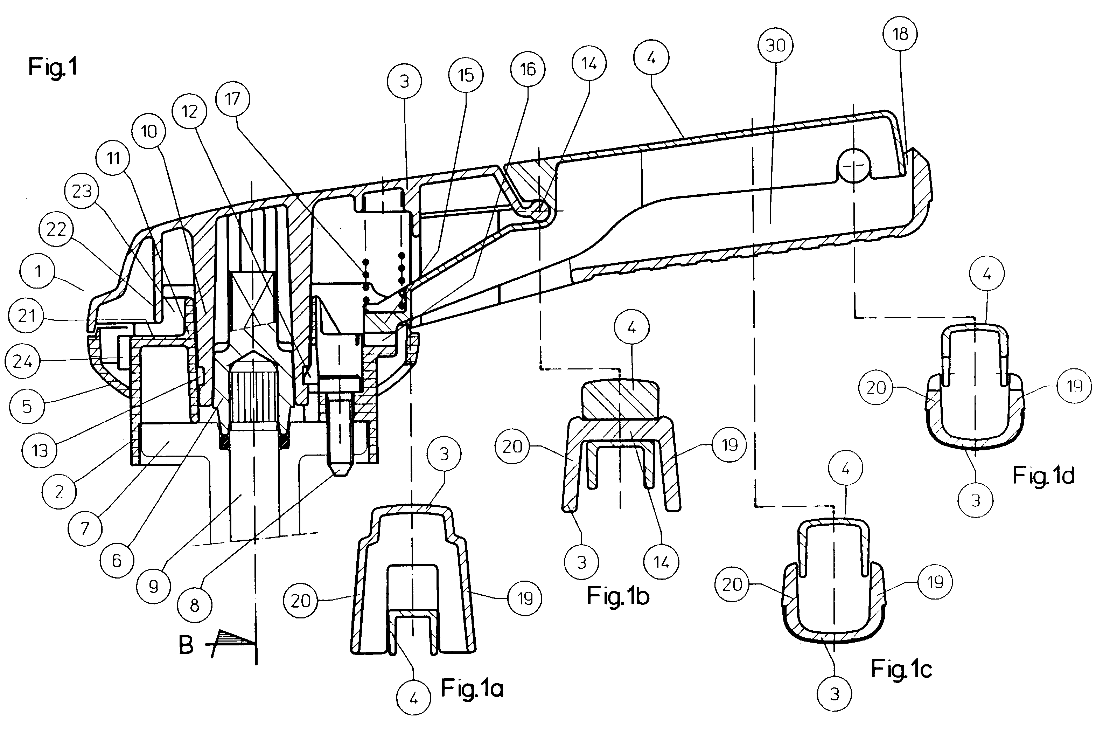

In dem Katalog "amri, Actuators and Systems", Seite 10, Fig. 1-3, Ausgabe 7/86, wird ein Handgriff mit einem geschützten Rastmechanismus gezeigt. Dieser Griff erlaubt aber nicht das Feststellen in Zwischenstellungen, sondern beschränkt sich auf eine Verriegelung in den Endpositionen.

Die DE-A-3 710 981 und die DE-A-3 710 982 zeigen Handgriffe, bei welchen die Welle und der konturierte Bereich, in den ein Rastteil eingreift, von einer Schutzkappe am Ende des Handgriffs umgeben und so gegen Verschmutzung geschützt sind. Beim Ergreifen des Hebels wird ein Betätigungselement gegen den Hebel gedrückt, welches auf einen Mechanismus im Rastgriff wirkt und das Verschwenken ermöglicht. Die Schutzkappe wird am Ende des Handgriffs befestigt, welcher zuvor mit einer Schraube auf der Welle befestigt wurde. Im Falle einer Reparatur muß zum Entfernen des Handgriffs die Schutzkappe entfernt werden und so kann es vorkommen, daß die Schutzkappe nicht wieder montiert wird und der Mechanismus ungeschützt bleibt.

Eine andere Art des Verriegelungsmechanismus zeigt das DE-U-7 817 096. Hier weist der Handgriff einen mit einer vorgespannten Feder versehenen Rastzapfen parallel zur Wellenachse auf, der in verschiedene Bohrungen in der Platte am Gehäusehals einrastbar ist. Um die Verriegelung zu lösen, wird der Rastzapfen gegen die Federkraft zurückgezogen und rastet nach erfolgter Betätigung wieder in die nächstliegende Bohrung ein. Dies macht aber eine Zweihandbedienung erforderlich.

Das Problem der Erfindung ist es daher, einen Handgriff zu schaffen, der eine einhändige Bedienung bei geschütztem Verriegelungsmechanismus ermöglicht.

Erfindungsgemäß weist der Hebel im haubenartigen Ende eine Ausstülpung auf, welche in die Durchgangsöffnung des Zwischenteils eintaucht, wobei die Ausstülpung in der Durchgangsöffnung mittels Sicherungselementen gegen Herausgleiten gesichert ist, dabei aber um die Wellenachse verdrehbar ist.

Der Vorteil eines nach der Erfindung gestalteten Handgriffs liegt darin, daß die Befestigung voll gekapselt im Inneren des Handgriffs erfolgt und der Hebel nicht auf die Welle geklemmt, sondern im Zwischenteil gehalten und gegen axiale Bewegung gesichert wird. Die Ausstülpung nimmt das Wellenende auf und verbindet den Hebel drehfest mit der Welle. Der Hebel wird im Zwischenstück geführt und abgestützt und die Welle bleibt frei von Biegemomenten.

In der Weiterbildung nach Anspruch 2 weist der Hebel in seinem haubenartigen Ende eine hohle Ausstülpung auf, welche auf dem äußeren Umfang an ihrem einen Ende mit Aussparungen, z. B. in Form einer umlaufenden Nut, versehen ist. In diese Aussparungen greifen Mittel, z. B. auf federnden Zungen des Zwischenteils liegende Vorsprünge, ein und blockieren das axiale Verschieben des Hebels auf der Welle. Der Hebel wird also gewissermaßen in das Zwischenteil eingeklipst.

Mit der Weiterbildung nach Anspruch 3 und 4 wird das selbsttätige Lösen des Handgriffes verhindert. Die Blockierung der Zungen durch die Verbindungsmittel wird bewirkt, indem die geometrischen Abmessungen eines Verbindungsmittels so gewählt sind, daß die Verbindungsmittel am Rücken der Zungen anliegen. Einem Aufspreizen der Zungen, welches durch die aus den Aussparungen an der Ausstülpung des Hebels gleitenden Vorsprünge während eines axialen Verschiebens verursacht würde, wird kein Raum gelassen. Für die Montage des Handgriffes bedeutet dies, daß zuerst der Hebel und das Zwischenteil zusammengebaut werden, bevor die Verbindungsmittel zur Anlage an die Rückseiten der Zungen gebracht werden.

Durch Öffnungen im Hebel, die anschließend mit Stopfen verschlossen werden, können die Verbindungsmittel gelöst und angezogen werden. Werden Schrauben zur Befestigung des Zwischenteils verwendet, so ist es zweckmäßig, den Durchmesser der Durchgangsöffnungen für die Schrauben mit geringfügig verkleinertem Durchmesser so zu dimensionieren, daß die Schrauben im Zwischenteil gehalten werden. Über die Öffnungen im Hebel können die Schrauben nachträglich in den Endflansch eingeschraubt werden. Die Verstellmittel können dann bei der Demontage des Handgriffs nicht verloren gehen.

Die technische Gestaltung des Handgriffs nach Anspruch 6 hat den Vorteil, daß der Montageaufwand des Handgriffs verringert wird. Der Handgriff ist am Anfang der Öffnung auf der Oberseite mit einem Widerlager versehen, welches sich von einer Seitenwand zur anderen erstreckt und in die Öffnung hineinragt. Der Rastgriff wird von oben in die Öffnung eingeführt, durch die offene Unterseite aus dem Hebel wieder teilweise herausgeführt und so verdreht, daß er schließlich mit seinem Gegenlager in dem Widerlager ruht. Die Verwendung von zusätzlichen Bauteilen, wie z. B. Splinte, und das Einpassen dieser Bauteile in die Öffnungen der Seitenwände des Handgriffes und des Rastgriffes entfallen bei der erfindungsgemäßen Ausführung. Im betriebsfertigen Zustand des Handgriffes kann der Rastgriff nicht das Widerlager verlassen, da er dazu nicht ausreichend verdreht werden kann.

Wird der Rastgriff in das Widerlager gedrückt, so rastet bei der Ausführung nach Anspruch 7 der Rastgriff in seine Einbauchung über die Schwelle hinweg ein. Die Schwelle verhindert somit ein Herausfallen des Rastgriffes während der Montage des Handgriffs.

Mit der Weiterbildung nach Anspruch 8 wird die Ergonomie des Hebels verbessert, da sich die Finger an der geschlossenen Unterseite des Hebels abstützen können. Gleichzeitig verbessert sich die Stabilität des Hebels.

Die Weiterbildung nach Anspruch 9 weist ein zusätzliches Bauteil am Handgriff auf. Die ringförmige Schürze stellt einen Adapter dar, welcher sich von der Abmessung des Zwischenteils auf das haubenartige Ende des Hebels verändert. Die Schürze kann auf das Zwischenteil geklemmt werden oder in sonstiger Weise mit ihr verbunden sein. Der Übergang der Schürze zum Hebel ist so auszugestalten, daß größtmöglicher Schutz vor Eindringen von Fremdkörpern oder sonstigen Verunreinigungen gewährleistet ist. Dies wird insbesondere dann erreicht, wenn nur ein enger Spalt zwischen den Teilen freibleibt und wenn die sich gegenüberliegenden Flächen eine Labyrinthgeometrie aufweisen.

Durch einen zweiten konturierten Bereich am Zwischenteil und einem entsprechenden Bereich an der Schürze wird eine Verdrehsicherung erreicht.

Wird in den oben geschilderten Ausführungen die Öffnung der Armatur von 0° bis 90° durch einen integrierten Anschlag begrenzt, bietet die Weiterbildung nach Anspruch 11 den Vorteil, die Öffnung der Armatur zwischen 0° und einem Wert ≤ 90° durch einen verstellbaren Anschlag zu begrenzen. Die Weiterbildung läßt die Funktion des Rastgriffes unberührt und legt die Eckwerte fest. Der Vorteil eines regelbaren Anschlages besteht darin, daß nach erfolgter Voreinstellung die Armatur ohne weitere Kenntnis des Bedienungspersonals in die vorgesehene Stellung zu bringen ist. Damit läßt sich der Volumenstrom eines Rohrleitungssystems in vorgegebener Weise regeln. Die Schürze wird durch ein Stellelement fest in seiner Stellung am Zwischenteil gehalten. Um den Öffnungsweg der Armatur einzustellen, wird die Schürze nach dem Lösen der Stellschraube am Zwischenteil entlang heruntergezogen, um den gewünschten Winkel verdreht und dann wieder in den konturierten Bereich am Zwischenstück eingreifend nach oben geschoben. Nach dem Feststellen der Stellschraube ist der Öffnungsweg der Armatur von dem in das haubenartige Ende des Hebels hineinragenden Nocken und einer Seitenwand der Vertiefung der Oberseite des Zwischenstückes begrenzt.

Mit der Weiterbildung nach Anspruch 12 wird die Armatur verriegelt und der Öffnungsweg eingeschränkt. Um den Öffnungswinkel zu begrenzen, befinden sich zwei Anschläge am Zwischenteil. Diese können neben dem konturierten Bereich angeordnet sein, aber auch in sonstiger Weise, zum Beispiel gegenüberliegend angeordnet, den Drehwinkel begrenzen. Der konturierte Bereich befindet sich am äußeren Rand des Zwischenteils.

Dem konturierten Bereich gegenüber ist gemäß der Weiterbildung nach Anspruch 13 eine Vertiefung angebracht, welche sich über den Öffnungsbereich für eine Absperrklappe erstreckt und einen Anschlag für die Betätigung der Armatur bildet. In die Vertiefung ragt eine weitere am Hebel befindliche Ausstülpung hinein, welche in der jeweiligen Endstellung des Öffnungsbereiches an die Seitenwände der Vertiefung anliegt.

Die Weiterbildung nach Anspruch 14 hat den Vorteil, daß der Handgriff von dem Armaturengehäuse thermisch entkoppelt und dadurch ein Kondensationsniederschlag im Fall einer Verwendung in einem Kühlkreislauf vermieden wird.

Die Weiterbildung nach Anspruch 15 lehrt die thermische Entkoppelung der Welle von dem Handgriff mit einer Kupplung aus thermisch isolierendem Material. Der Hebel ist dabei nicht direkt mit der Welle verbunden, sondern wirkt über die Kupplung auf die Welle ein. Ermöglicht wird dadurch die Verwendung eines Materials beliebiger Wärmeleitfähigkeit für den Hebel. Das Material kann somit nach anderen Kriterien, z. B. Festigkeit, ausgewählt werden.

Ein Ausführungsbeispiel der Erfindung ist in der Zeichnung dargestellt und wird im folgenden näher beschrieben. Es zeigen:
- Fig. 1: den Handgriff im Längsschnitt,
- Fig. 1 a - d: Querschnitte des Hebels im Schnitt A-A
- Fig. 2: den Hebel mit Rastgriff von unten,
- Fig. 3: den Handgriff im Schnitt B-B,
- Fig. 4: den Handgriff im Längsschnitt mit regelbarem Anschlag,
- Fig. 5: den Handgriff mit regelbarem Anschlag im Schnitt C-C.

Der Handgriff (1) besteht aus dem Zwischenteil (2), dem Hebel (3) mit Rastgriff (4), einer Schürze (5) und einer Kupplung (6). Das Zwischenteil (2) sitzt auf dem Endflansch (7) einer Absperrarmatur und ist mit diesem über zwei sich gegenüberliegende Schrauben (8) verschraubt. In der Fig. 1 ist eine der Schrauben (8), um 45° versetzt gezeichnet, dargestellt. In der Mitte des Zwischenteils (2) ist ein Durchlaß für die Welle (9) der Armatur, wobei die Welle formschlüssig mit der Kupplung (6) verbunden ist und über den Hebel (3) verdreht wird. Dazu greift die Kupplung (6) in eine hohlkegelförmige Ausstülpung (10) am Handgriff ein, welche in dem Zwischenteil (2) in einer kegelförmigen Wand (11) als Führung abgestützt, zentriert und über mit Nocken versehenen federnden Zungen (12) verriegelt ist. Die Wand der Ausstülpung (10) verjüngt sich konisch zu ihrem Ende hin, wobei der Innendurchmesser unverändert bleibt. Die Wand (11) des Zwischenteils (2) ist zur Aufnahme der Ausstülpung ebenfalls konisch ausgeführt. Dies erleichtert die Montage. Die Nocken greifen in eine umlaufende Nut (13) an der Ausstülpung (10) des Hebels (3) ein und die Zungen (12) werden vom Kopf der Schraube (8) gegen das Freigeben der Verriegelung gesichert.

Im Ausführungsbeispiel werden zwei sich gegenüberliegende federnde Zungen (12) gezeigt. Die Schrauben (8) liegen mit ihren Köpfen am Rücken der Zungen (12) an und werden bei der Montage in die Löcher des Zwischenteils eingeschraubt. Die Löcher weisen einen verringerten Durchmesser gegenüber den Schrauben auf, so daß die Schrauben festgehalten sind. In dieser Stellung befinden sich die Köpfe der Schrauben (8) noch nicht im Bereich der federnden Zungen (12) und behindern nicht das Einclipsen des Hebels in das Zwischenteil. Erst bei der Verschraubung des Handgriffes werden die Schrauben weiter eingedreht und die Köpfe kommen zur Anlage an den Rücken der federnden Zungen.

Der Rastgriff (4) ist im Hebel (3) an einem zylindrischen Widerlager (14) des Hebels (3) drehbar gelagert und greift mit dem einen Ende (15) in einen konturierten Bereich (16) am Zwischenteil (2) ein. Er wird von einer vorgespannten Druckfeder (17) in den konturierten Bereich (16) hineingedrückt.

Der Hebel (3) geht an der Stelle des Widerlagers (14) von einem U-förmigen, oben offenen Profil über in ein U-förmiges, oben geschlossenes und unten offenes Profil (Fig. 1 a - d). Der Übergang ist so ausgeführt, daß für eine kurze Strecke nur die Seitenwände (19, 20) des Hebels (3) vorhanden sind und ein von oben nach unten offener Durchgang am Hebel (3) vorliegt.

Die Montage des Rastgriffs (4) erfolgt durch Einstecken und Verdrehen des Rastgriffs (4) in eine Öffnung (18) auf der Oberseite des Hebels (3) vor der Verbindung des Hebels (3) mit dem Zwischenteil (2). Das vordere Ende (15) des Rastgriffes (4) wird an dieser Stelle in den Durchgang gesteckt und in den Hebel eingeführt, bis es in das zylindrische Widerlager (14) eingreift. Dann kann die Druckfeder (17) ohne Vorspannung zwischen das Ende (15) des Rastgriffes (4) und den Hebel (3) gesteckt werden. Wird nun der vormontierte Hebel (3) mit Rastgriff (4) und Feder (17) in das Zwischenteil (2) eingeführt, so wird die Feder (17) vorgespannt und der Rastgriff (4) greift in den konturierten Bereich (16) des Zwischenteils (2) ein.

Dem konturierten Bereich (16) gegenüberliegend angeordnet, befindet sich eine Vertiefung (21) der Deckfläche des Zwischenteils (2), in welche eine weitere Ausstülpung (22) des Hebels (3) eingreift. Die Vertiefung erstreckt sich über den Öffnungswinkel, und deren Seitenwände (23) wirken als Anschlag für die Ausstülpung (22) und begrenzen den Betätigungsweg der Armatur. Ebenfalls an dieser Seite des Zwischenteils (2) befindet sich am äußeren Umfang ein zweiter konturierter Bereich (24), welcher sich wie die Vertiefung (21) erstreckt und in Form einer Verzahnung ausgeführt ist.

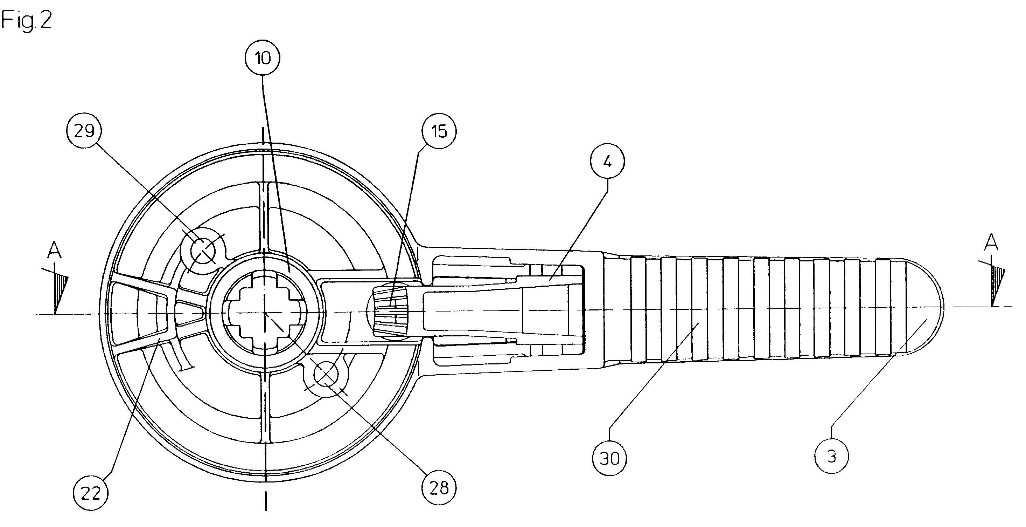

Die Fig. 2 zeigt den Hebel (3) von unten und läßt Öffnungen (28, 29) zur Betätigung der Schraube (8) erkennen. Die Öffnungen (28, 29) werden nach der Montage durch Stopfen verschlossen. Der Durchmesser der Öffnungen (28, 29) ist geringer als der größte Durchmesser der Schrauben (8), so daß diese bei der Demontage nicht aus dem Handgriff fallen und verlorengehen können. Durch die Öffnungen (28, 29) lassen sich die Schrauben (8) mittels geeigneter Werkzeuge betätigen und der Handgriff kann auf diese Weise mit dem Endflansch (7) verbunden oder von diesem gelöst werden. An seiner Unterseite ist der Hebel (3) mit einer Abrutschsicherung (30) in Form eines Rechteckprofils versehen.

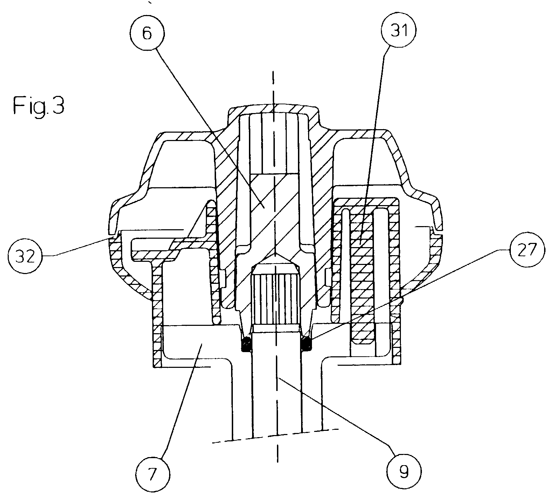

Die Fig. 3 stellt den Handgriff in einem weiteren Schnitt B-B dar. Zu erkennen ist die Verdrehsicherung des Zwischenteils (2) durch einen in den Endflansch (7) ragenden Stift (31). Die Dichtstelle (32) der Schürze (5) mit dem haubenartigen Ende des Hebels (3) ist in Form einer Labyrinthdichtung ausgeführt, die das Eindringen von Fremdkörpern in den Handgriff (1) erschwert. Der Übergang an der Stelle (32) von der Schürze (5) zum Hebel (3) ist gewissermaßen glatt ausgeführt. Das Zwischenteil (2) umschließt den Endflansch (7) in Umfangsrichtung und erstreckt sich in Richtung Absperrkörper. An das Zwischenteil (2) kann eine Isolation auf einfache Weise angebracht werden.

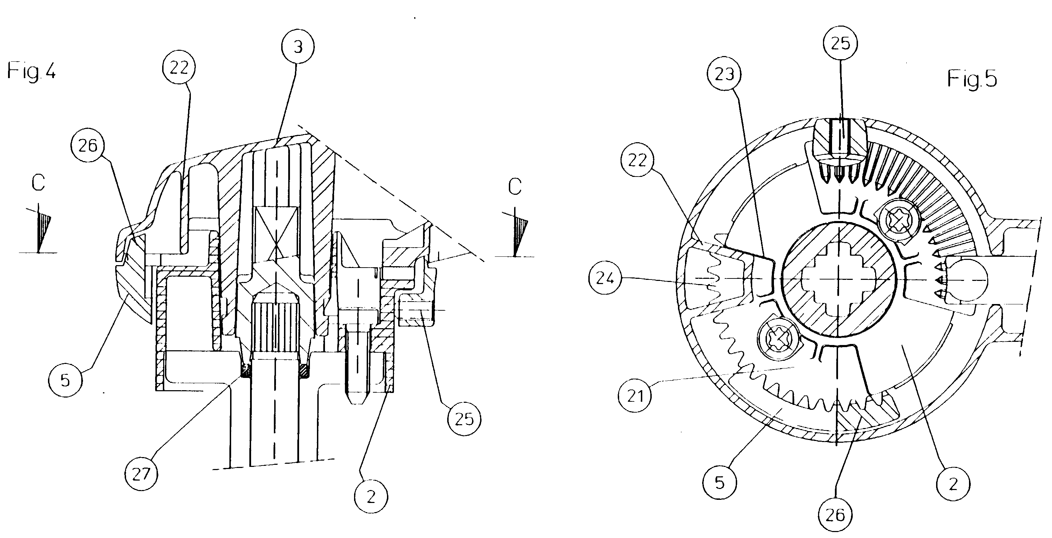

In die Verzahnung (24) greift die Schürze (5) bei Ausführung nach Anspruch 11 ein und verändert den Anschlag (Fig. 4 und 5). Die Schürze (5) wird dann z.B. durch eine Stellschraube (25) am Zwischenteil (2) festgehalten. Sie begrenzt den Öffnungswinkel auf einen zwischen 0° und 90° gewählten Wert durch einen in das haubenartige Ende des Handhebels hineinragenden Nocken (26). Die Kupplung (6) wirkt im Ausführungsbeispiel zusätzlich auf eine elastische Dichtung (27), welche die Welle (9) gegen die Umgebung abdichtet.

## Patentansprüche

1. Aus mehreren Bauteilen bestehender Handgriff zur Betätigung einer Armatur,
- welcher bei Betätigung mittels eines Hebels (3) über eine Welle (9) auf einen Absperrkörper einwirkt, wobei die Welle (9) im Hals eines Armaturengehäuses geführt ist und wobei sich am Ende des Halses ein Endflansch (7) zur Befestigung des Handgriffs befindet,
- und welcher einen aus einem im Hebel (3) angebrachten Rastgriff (4) bestehenden Feststellmechanismus für vorgegebene Stellungen aufweist, wobei der Rastgriff (4) mit einem konturierten Bereich (15) in einen entsprechend konturierten Bereich (16) eines mit dem Endflansch (7) am Gehäusehals verbundenen Zwischenteils (2) des Handgriffes (1) eingreift, wobei das Zwischenteil (2) eine Durchgangsöffnung für die Welle (9) der Armatur aufweist,
- wobei der Hebel (3) ein haubenartiges Ende besitzt, welches an der Verbindungsstelle mit der Welle (9) das Zwischenteil (2) überdeckt, und wobei der Rastgriff (4) mit dem konturierten Bereich (15) in das haubenartige Ende des Hebels (3) hineinragt,
**dadurch gekennzeichnet,** daß der Hebel (3) im haubenartigen Ende eine Ausstülpung (10) aufweist, welche in die Durchgangsöffnung des Zwischenteils (2) eintaucht, wobei die Ausstülpung (10) in der Durchgangsöffnung mittels Sicherungselementen gegen Herausgleiten gesichert ist, dabei aber um die Wellenachse verdrehbar ist.

2. Handgriff nach Anspruch 1, dadurch gekennzeichnet, daß zur Sicherung gegen Herausgleiten die Ausstülpung (10) mit Aussparungen (13) versehen ist, wobei an der Stelle der Durchgangsöffnung in der Wand (11) des Zwischenteils (2) Mittel angebracht sind, welche in die Aussparungen (13) eingreifen.

3. Handgriff nach Anspruch 2, dadurch gekennzeichnet, daß die Mittel aus federnden Zungen (12) mit in die Öffnung hineinragenden Vorsprüngen gebildet werden.

4. Handgriff nach Anspruch 3, dadurch gekennzeichnet, daß Verbindungsmittel (8) zur Verbindung des Zwischenteils (2) mit dem Endflansch (7) vorgesehen sind, die an der der Durchgangsöffnung abgewandten Seite der Wand (11) des Zwischenteils (2) angeordnet sind, wobei sich die Verbindungsmittel (8) am Rücken der federnden Zungen (12) erstrecken und die Zungen (12) an einer Bewegung aus der Öffnung heraus hindern.

5. Handgriff nach Anspruch 4, dadurch gekennzeichnet daß der Hebel (3) an seinem haubenartigen Ende mit Öffnungen (28, 29) versehen ist, welche einen geringeren Durchmesser als der größte Durchmesser der Verbindungsmittel (8) aufweisen und welche so auf dem Hebel (3) angeordnet sind, daß sie in bestimmter Stellung des Hebels (3) über den Verbindungsmitteln (8) zu liegen kommen.

6. Handgriff nach einem oder mehreren der vorhergehenden Ansprüche, dadurch gekennzeichnet, daß der Hebel (3) im sich von der Welle (9) weg erstreckenden Teil aus Seitenwänden (19, 20) und einer Oberseite besteht, eine Querschnittsfläche in Form eines auf den Kopf gestellten U aufweist und an seinem Ende auf seiner Oberseite eine Öffnung (18) besitzt, aus der ein Ende eines Rastgriffes (4) teilweise herausragt, wobei der Hebel (3) am Anfang der Öffnung (18) ein aus dem Hebel (3) selbst hervorgehendes Widerlager (14) aufweist, welches sich von einer Seitenwand (19) des Hebels (3) zur anderen Seitenwand (20) erstreckt, und daß der Rastgriff (4) ein Gegenlager aufweist, welches mit dem Widerlager (14) zusammenwirkt.

7. Handgriff nach Anspruch 6, dadurch gekennzeichnet, daß das Widerlager (14) durch eine Verdickung der Wandstärke der Oberseite gebildet ist und daß das Gegenlager eine Einbauchung des Rastgriffes (4) ist, welche am Übergang eine Schwelle aufweist.

8. Handgriff nach Anspruch 6 oder 7, dadurch gekennzeichnet, daß die Unterseite des Hebels (3) auf dem sich von der Welle (9) weg erstreckenden Teil nach dem Widerlager (14) geschlossen ist und der Hebel (3) von dieser Stelle an eine Querschnittsfläche in Form eines U aufweist.

9. Handgriff nach einem oder mehreren der vorhergehenden Ansprüche, dadurch gekennzeichnet, daß das Zwischenteil (2) mit einer an das haubenartige Ende des Hebels (3) glatt anschließenden ringförmigen Schürze (5) versehen ist.

10. Handgriff nach Anspruch 9, dadurch gekennzeichnet, daß das Zwischenteil (2) einen zweiten konturierten Bereich (24) aufweist, wobei die ringförmige Schürze (5) mit einem diesem entsprechend konturierten Bereich versehen ist, welcher in zusammengefügtem Zustand in den konturierten Bereich des Zwischenteils (2) eingreift und dadurch die Schürze (5) gegen Verdrehen sichert.

11. Handgriff nach Anspruch 10, dadurch gekennzeichnet, daß die Schürze (5) außerdem mit einem Nocken (26) versehen ist, welcher sich in das haubenartige Ende des Hebels (3) hinein erstreckt und für eine zweite Ausstülpung (22) des Hebels (3) als Anschlag dient.

12. Handgriff nach einem oder mehreren der vorhergehenden Ansprüche, dadurch gekennzeichnet, daß der konturierte Bereich (16) des Zwischenteils (2) am äußeren Rand liegt, sich mindestens über den Bereich des Öffnungswinkels erstreckt und daß an dem Zwischenteil (2) zwei Anschläge zur Begrenzung der Betätigung des Hebels (3) angebracht sind, welche seitlich oder gegenüberliegend zum konturierten Bereich (16) angeordnet sind.

13. Handgriff nach Anspruch 12, dadurch gekennzeichnet, daß die Oberseite des Zwischenteils (2) eine Vertiefung (21) aufweist, welche dem konturierten Bereich (16) gegenüberliegt, daß sich die Vertiefung (21) über den Öffnungsbereich erstreckt und seitliche Wände (23) am Übergang zur Oberseite aufweist, wobei die seitlichen Wände (23) Anschläge für eine am Hebel (3) befindliche Ausstülpung (22) bilden, welche in die Vertiefung (21) hineinragt.

14. Handgriff nach einem oder mehreren der vorhergehenden Ansprüche, dadurch gekennzeichnet, daß das Zwischenteil (2) aus einem Material geringer Wärmeleitfähigkeit besteht.

15. Handgriff nach einem oder mehreren der vorhergehenden Ansprüche, dadurch gekennzeichnet, daß an dem äußeren Ende der Welle (9) eine Kupplung (6) aus einem Material geringer Wärmeleitfähigkeit angebracht ist, welche zum einen mit dem Ende der Welle (9) und zum anderen mit dem Hebel (3) zur Betätigung der Armatur verbunden ist.

## Claims

1. A handle comprising a plurality of components for the actuation of a valve fitting,
- which on operation by means of a lever (3) via a shaft (9) acts on a valve member, the shaft (9) running in the neck of a valve fitting housing and a terminal flange (7) being located at the end of the neck for the attachment of the handle,
- and which has a setting mechanism comprising a detent handle (4) arranged in the lever (3), for predetermined positions, a portion (15) with projections of the detent handle (4) engaging a corresponding portion (16) with projections on an intermediate part (2), connected with the terminal flange (7) on the housing's neck, of the handle (1), said intermediate part (2) having a through opening for the shaft (9) of the valve fitting,
- the lever (3) possessing a hood-like end, which at the point of connection with the shaft (9) covers the intermediate part (2), and the detent handle (4) extending at its portion (15) with projections into the hood-like end of the lever (3),
characterized in that in the hood-like end the lever (3) possesses a spigot (10) which extends into the through opening of the intermediate part (2), the spigot (10) being secured in the through opening by means of fastening elements to prevent it slipping out, it however being able to turn about the shaft's axis.

2. The handle as claimed in claim 1, characterized in that for preventing slipping out the spigot (10) is provided with recesses (13), means being arranged at the position of the through opening in the wall (11) of the intermediate part (2), such means fitting into the recesses (13).

3. The handle as claimed in claim 2, characterized in that the means are constituted by resilient lugs (12) with projections extending into the opening.

4. The handle as claimed in claim 3, characterized in that connecting means (8) are provided for the connection of the intermediate part (2) with the terminal flange (7), such connecting means being arranged on the side, facing away from the through opening, of the wall (11) of the intermediate part (2), the connecting means (8) extending along the back of the resilient lugs (12) and preventing the lugs (12) from moving out of the opening.

5. The handle as claimed in claim 4, characterized in that at its hood-like end the lever (3) is provided with openings (28 and 29), which have a smaller diameter than the maximum diameter of the connecting means (8) and which are so arranged on the lever (3) that in a certain position of the lever (3) they assume a position over the connecting means (8).

6. The handle as claimed in any one or more of the preceding claims, characterized in that in the part extending away from the shaft (9) the lever (3) consists of lateral walls (19 and 20) and a top side, possesses a cross section in the form of an inverted U and at its end possesses an opening (18) on its surface at its end, one end of a detent handle (4) partially extending from such opening (18), the lever (3) having at the start of the opening (18) a counter bearing (14) itself extending from the lever (3), which bearing extends from one lateral wall (19) of the lever (3) to the other lateral wall (20), and in that the detent handle (4) possesses a counter bearing, which cooperates with the counter bearing (14).

7. The handle as claimed in claim 6, characterized in that the counter bearing (14) is constituted by a thickening of the wall thickness of the top side and in that the counter bearing is a concave part of the detent handle (4), which at the transition possesses a threshold.

8. The handle as claimed in claim 6 or claim 7, characterized in that the lower side of the lever (3) is closed on the part extending away from the shaft (9) following the counter bearing (14) and as from this point the lever (3) possesses a cross sectional area in the form of a letter U.

9. The handle as claimed in any one or more of the preceding claims, characterized in that the intermediate part (2) is provided with an annular skirt (5) smoothly merging with the hood-like end of the lever (3).

10. The handle as claimed in claim 9, characterized in that the intermediate part (2) possesses a second portion (24) with projections, the annular skirt (5) being provided with a portion, corresponding to same, having projections, which in the fitted together condition fit into the portion with projections of the intermediate part (2) and therefore prevent turning of the skirt (5).

11. The handle as claimed in claim 10, characterized in that the skirt (5) is provided with a knob (26), which extends into the hood-like end of the lever (3) and serves as an abutment for a second spigot (22) on the lever (3).

12. The handle as claimed in any one or more of the preceding claims, characterized in that the portion (16) with projections of the intermediate part (2) is placed at the outer edge, extends at least along the portion with the opening angle and in that on the intermediate part (2) two abutments are arranged for limiting the actuation of the lever (3) and which are arranged to the side of or opposite the portion (16) with projections.

13. The handle as claimed in claim 12, characterized in that the top side of the intermediate part (2) has a depression (21), which is opposite to the portion (16) with projections, in that the depression (21) extends over the opening portion and possesses lateral walls (23) at the transition to the top side, the lateral walls (23) forming abutments for a spigot (22) located on the lever (3), which spigot extends into the depression (21).

14. The handle as claimed in any one or more of the preceding claims, characterized in that the intermediate part (2) consists of a material with a low thermal conductivity.

15. The handle as claimed in any one or more of the preceding claims, characterized in that at the outer end of the shaft (9) a coupling is arranged made of a material with a low thermal conductivity and which is connected on the one hand with the end of the shaft (9) and on the other hand with the lever (3) for the actuation of the valve fitting.

## Revendications

1. Poignée constituée de plusieurs pièces et destinée à actionner un robinet,
- qui, lors de l'actionnement, agit sur un obturateur au moyen d'un levier (3) par l'intermédiaire d'un arbre (9), l'arbre (9) étant guidé dans le collet d'un corps de robinet et une bride d'extrémité (7) destinée à la fixation de la poignée se trouvant à l'extrémité du collet,
- et qui comporte un mécanisme d'immobilisation en des positions prescrites constitué d'un manche d'encliquetage (4) monté dans le levier (3), le manche d'encliquetage (4) pénétrant par une partie (15) ayant un certain contour dans une partie (16) de contour correspondant d'une pièce intermédiaire (2) de la poignée, qui est reliée au collet du corps,la pièce intermédiaire (2) comportant une ouverture de passage pour l'arbre (9) du robinet,
- le levier (3) ayant une extrémité en capuchon, qui recouvre la pièce intermédiaire (2) au point de liaison avec l'arbre (9) et le manche d'encliquetage (4) faisant saillie par la partie (15) ayant un certain contour dans l'extrémité en capuchon du levier (3),
caractérisée en ce que le levier (3) comporte à l'extrémité en capuchon une excroissance (10) qui pénètre dans l'ouverture de passage de la pièce intermédiaire (2), l'excroissance (10) étant empêchée de glisser dans l'ouverture de passage au moyen d'éléments de blocage mais pouvant tourner par rapport à l'axe de l'arbre.

2. Poignée suivant la revendication 1, caractérisée en ce que pour prévenir tout glissement, l'excroissance (10) est munie d'évidements (13), des moyens qui pénètrent dans les évidements étant prévus dans la paroi (11) de la pièce intermédiaire (2) à l'emplacement de l'ouverture de passage.

3. Poignée suivant la revendication 2, caractérisée en ce que les moyens sont formés de languettes (12) élastiques ayant des saillies faisant saillie dans l'ouverture.

4. Poignée suivant la revendication 3, caractérisée en ce qu'il est prévu pour relier la pièce intermédiaire (2) à la bride d'extrémité (7), des moyens de liaison (8) qui sont disposés du côté de la paroi (11) de la pièce intermédiaire (2) qui est éloignée de l'ouverture de passage, les moyens de liaison (8) s'étendant au dos des languettes (12) élastiques et les languettes (12) empêchant tout mouvement de sortie de l'ouverture.

5. Poignée suivant la revendication 4, caractérisée en ce que le levier (3) est muni, à son extrémité en capuchon, d'ouvertures (28, 29) de plus petit diamètre que le plus grand diamètre des moyens (8) de liaison et disposées sur le levier (3) de façon à se trouver en une position déterminée du levier (3) au-dessus des moyens de liaison (8).

6. Poignée suivant une ou plusieurs des revendications précédentes, caractérisée en ce que le levier (3) est constitué en soi depuis la partie s'éloignant de l'arbre (2) de parois latérales (19 et 20) et d'un côté supérieur, comporte une surface de section transversale sous la forme d'un U renversé et possède, à son extrémité du côté supérieur, une ouverture (18) de laquelle une partie d'un manche d'encliquetage (4) sort partiellement, le levier (3) comportant, au début de l'ouverture (18), une butée (14) elle-même issue du levier (3) et s'étendant d'une paroi latérale (19) du levier (3) à l'autre paroi latérale (20) et en ce que le manche d'encliquetage (4) comporte une contre-butée qui coopère avec la butée (14).

7. Poignée suivant la revendication 6, caractérisée en ce que la butée (14) est formée par un épaississement de l'épaisseur de la paroi du côté supérieur et en ce que la contre-butée est un renfoncement du manche d'encliquetage (4) qui comporte un talon à la transition.

8. Poignée suivant la revendication 6 ou 7, caractérisée en ce que le côté inférieur du levier (3) est fermé après la butée (4) sur la partie s'éloignant de l'arbre (9) et le levier (3) a, à partir de cette endroit, une section transversale en forme de U.

9. Poignée suivant une ou plusieurs des revendications précédentes, caractérisée en ce que la pièce intermédiaire (2) est munie d'une jupe (5) annulaire se raccordant de manière lisse à l'extrémité en capuchon du levier (3).

10. Poignée suivant la revendication 9, caractérisée en ce que la pièce intermédiaire (2) a une deuxième partie (24) présentant un certain contour, la jupe (5) annulaire étant munie d'une partie ayant un contour correspondant qui, à l'état assemblé, pénètre dans la partie ayant un certain contour de la pièce intermédiaire (2) et empêche ainsi la jupe (5) de tourner.

11. Poignée suivant la revendication 10, caractérisée en ce que la jupe (5) est munie en outre d'une partie saillante, qui s'étend dans l'extrémité en capuchon du levier (3) et sert de butée pour une deuxième excroissance (22) du levier (3).

12. Poignée suivant l'une ou plusieurs des revendications précédentes, caractérisée en ce que la partie (16) ayant un certain contour de la pièce intermédiaire (2) se trouve au bord extérieur, s'étend au moins sur la partie de l'angle d'ouverture et en ce qu'il est prévu sur la pièce intermédiaire (2) deux butées de limitation de l'actionnement du levier (3), qui sont disposées latéralement ou en face de la partie (16) ayant un certain contour.

13. Poignée suivant la revendication 12, caractérisée en ce que le côté supérieur de la pièce intermédiaire (2) comporte une cavité (21), puis est en face de la partie (16) ayant un certain contour, en ce que la cavité (21) s'étend sur la région d'ouverture et comporte des parois (23) latérales à la transition avec le côté supérieur, les parois (23) latérales formant des butées pour une excroissance (22) se trouvant sur le levier (3) et pénétrant dans la cavité (21).

14. Poignée suivant l'une ou plusieurs des revendications précédentes, caractérisée en ce que la pièce intermédiaire (2) est en un matériau ayant une faible conductivité thermique.

15. Poignée suivant l'une ou plusieurs des revendications précédentes, caractérisée en ce qu'il est monté, à l'extrémité extérieure de l'arbre (9), un dispositif d'accouplement en un matériau de faible conductivité thermique, qui est relié d'une part à l'extrémité de l'arbre (9) et d'autre part au levier (3) pour actionner le robinet.
